# EUROPÄISCHE PATENTSCHRIFT

(11) **EP 3 904 702 B1**
(45) Veröffentlichungstag und Bekanntmachung des Hinweises auf die Patenterteilung: **08.06.2022**
(21) Anmeldenummer: 20171983.8
(22) Anmeldetag: 29.04.2020
(51) Int. Cl.: F16B 2/12, E04H 12/22, F16B 7/04

(54) **KLEMMHALTER**
CLAMPING HOLDER
SUPPORT DE SERRAGE

(43) Veröffentlichungstag der Anmeldung: 03.11.2021
(73) Patentinhaber: Menz Industriedienstleistungs-GmbH, 98544 Zella-Mehlis OT Benshausen (DE)
(72) Erfinder: MENZ, Daniel, 98547 Schwarza (DE)
(74) Vertreter: Liedtke & Partner Patentanwälte

(56) Entgegenhaltungen:
- EP-A1- 3 316 395
- WO-A1-2014/028830
- DE-U1- 7 731 005

## Beschreibung

Die Erfindung betrifft einen Klemmhalter zum Befestigen eines Mastes, insbesondere eines Sonnenschirms.

Aus der DE 77 31 005 U1 ist ein Klemmhalter zum Befestigen von einen runden Schaft aufweisenden Gegenständen, beispielsweise Sonnenschirmen, an einem Rohr oder Stab, bekannt. Weitere Klemmhalter sind durch EP 3 316 395 A1 und WO 2014/028830 A1 offenbart.

Der Erfindung liegt die Aufgabe zu Grunde, einen verbesserten Klemmhalter anzugeben.

Die Aufgabe wird erfindungsgemäß gelöst durch einen Klemmhalter mit den Merkmalen des Anspruchs 1.

Vorteilhafte Ausgestaltungen der Erfindung sind Gegenstand der Unteransprüche. Ein erfindungsgemäßer Klemmhalter zum Befestigen eines Masts (beispielsweise eines Sonnenschirms) umfasst mindestens zwei gleichartig ausgebildete Halbschalen, die in einer Axialrichtung jeweils eine gerade Seite und eine Klemmseite aufweisen, wobei in einer Axialrichtung verlaufend gleichförmig über einen Umfang der Halbschale verteilt vier oder acht Bohrungen vorgesehen sind, wobei auf zwei einander in einer Radialrichtung gegenüberliegende Seiten der Halbschale jeweils eine gerade erste Klemmfläche mit einer ersten Breite angeordnet ist, wobei von der geraden ersten Klemmfläche ausgehend eine Länge der Halbschale in der Axialrichtung in mehreren Stufen ansteigt, so dass weitere gerade Klemmflächen mit zunehmender Breite ergeben.

In einer Ausführungsform ist auf zwei einander in einer Radialrichtung gegenüberliegenden Seiten der Halbschale, die um einen Winkel um die Axialrichtung, beispielsweise 45° bis 135°, insbesondere 85° bis 95°, vorzugsweise 90°, zu den beiden Seiten mit den gerade Klemmflächen versetzt sind, jeweils eine erste runde Klemmfläche vorgesehen, die eine Form mit einem Radius oder mehreren Radien oder in der Art einer Parabel oder Hyperbel um deren Scheitelpunkt aufweist. Beispielsweise können mehrere Radien miteinander in der runden Klemmfläche verschnitten sein.

Der Klemmhalter erlaubt das Klemmen einer Vielzahl unterschiedlicher Profile mit kreisförmigem oder rechteckigem Querschnitt durch Auswahl der entsprechenden Klemmfläche. Bei Verwendung von zwei Halbschalen ist zumindest eine Wandbefestigung eines Masts möglich.

In einer Ausführungsform umfasst der Klemmhalter vier gleichartig ausgebildete Halbschalen. In diesem Fall kann in einem Paar Halbschalen ein Mast und in einem zweiten Paar Halbschalen ein Profil (beispielsweise ein Balkongeländer) gehalten und diese miteinander verbunden werden. Durch Verdrehen der beiden Paare zueinander ist bei vier Bohrungen die senkrechte Befestigung des Masts an einem senkrechten oder waagerechten Profil möglich. Bei acht Bohrungen ist außerdem die senkrechte Befestigung des Masts an einem um 45° versetzten Profil möglich.

In einer Ausführungsform weist jede der Halbschalen einen zumindest annähernd kreisförmigen, quadratischen oder oktaedrischen Querschnitt auf.

In einer Ausführungsform ist auf zwei Paaren von jeweils zwei einander in einer Radialrichtung gegenüberliegenden Seiten der Halb schale, die um einen Winkel um die Axialrichtung, beispielsweise +/-40° bis 50°, insbesondere +/-45°, zu den beiden Seiten mit den geraden Klemmflächen versetzt sind, jeweils eine zweite runde Klemmfläche vorgesehen, die eine Form mit einem Radius oder mehreren Radien oder in der Art einer Parabel oder Hyperbel um deren Scheitelpunkt aufweist, wobei der Radius der zweiten runden Klemmfläche geringer sein kann als der Radius der ersten runden Klemmfläche. Hierdurch wird die Auswahl möglicher Masten, die mit dem Klemmhalter gehalten werden können, zusätzlich erweitert. Beispielsweise können mehrere Radien miteinander in der zweiten runden Klemmfläche verschnitten sein. Hierdurch ergeben sich insgesamt weitere vier Klemmbereiche, beispielsweise für Schirmstöcke mit Durchmessern von 22 mm und 25 mm.

In einer Ausführungsform weisen die Bohrungen von der geraden Seite aus jeweils eine Sechskantaufnahme zur Aufnahme eines Schraubenkopfes oder einer Gewindemuffe auf. Zum einen kann auf diese Weise ein Gegenhalten einer Schraube, Mutter oder Muffe bei der Montage entfallen. Zum anderen können in den Sechskantaufnahmen aufgenommene Muffen zwischen zwei Paaren von Halbschalen den Formschluss zwischen diesen beiden Paaren von Halbschalen verbessern.

In einer Ausführungsform sind ferner vier Gewindestangen, acht Muttern und vier Gewindemuffen mit Außensechskant zum Aufschrauben auf die Gewindestangen vorgesehen, die in einem mittleren Bereich auf die Gewindestangen aufschraubbar oder aufgeschraubt und optional mit diesen verprägt sind. Alternativ können auch Schrauben und lediglich vier Muttern vorgesehen sein.

In einer weiteren Ausführungsform sind ferner vier Schrauben und vier Muttern und ein Bügel vorgesehen, umfassend einen gewölbten Bereich zur Aufnahme eines Masts und zwei an den gewölbten Bereich anschließende Flansche zur Anlage an der geraden Seite einer Halbschale, wobei die Flansche Bohrungen aufweisen, die mit den Bohrungen fluchten, wenn die Flansche des Bügels an der geraden Seite anliegen, wobei der gewölbte Bereich eine zentrale Bohrung in der Axialrichtung aufweist, die auf ihrer Innenseite eine Sechskantaufnahme für eine Mutter oder Muffe aufweist, wobei ferner eine Schraube zum Einschrauben in die zentrale Bohrung vorgesehen ist. In dieser Ausführungsform kann ein Profil (beispielsweise ein Balkongeländer) zwischen den Halbschalen geklemmt und ein Mast im Bügel geklemmt werden.

In einer Ausführungsform sind zwei Druckplatten zur Aufnahme im gewölbten Bereich des Bügels vorgesehen, die einander im Einbauzustand zugewandte Hohlkehlen zur Aufnahme des Masts aufweisen. Auf diese Weise wird der Druck von der Schraube besser auf den Mast verteilt, so dass eine Flächenpressung erzielt wird.

In einer Ausführungsform sind im gewölbten Bereich und an den Druckplatten zueinander komplementäre Rippen und Nuten zur Führung der Druckplatten in der Axialrichtung vorgesehen. Auf diese Weise wird die Führung verbessert und ein Verkippen und/oder Verklemmen verhindert.

In einer Ausführungsform weist die Halbschale in Richtung der geraden Seite eine Wandung auf, wobei die Wandung und eine zur Anlage an der Wandung bestimmte Seite der Druckplatte zueinander komplementäre Vertiefungen und Vorsprünge aufweisen. Auf diese Weise wird die Positionierung der einen Druckplatte an der Halbschale verbessert.

In einer Ausführungsform weist die Wandung einen umlaufenden Rand zur Positionierung der Flansche auf.

Die Wandung kann durch Verstärkungsrippen im Inneren der Halbschale verstärkt sein. Die Verstärkungsrippen können beispielsweise eine ovale oder im Wesentlichen ovale Verstärkungsrippe umfassen, die mittig auf der Wandung angeordnet ist und deren Längsseiten den runden Klemmflächen zugewandt sind. Auf den Längsseiten der ovalen Verstärkungsrippe kann die Form der runden Klemmfläche nochmals wiederholt sein, so dass sich weitere zwei runde Klemmbereiche ergeben. Die Wandung kann insbesondere innerhalb der ovalen Verstärkungsrippe durchbrochen sein. Die Verstärkungsrippen können weiter beispielsweise von den Bohrungen ausgehende und zur ovalen Verstärkungsrippe verlaufende Verstärkungsrippen umfassen. Auf den Verstärkungsrippen und der ovalen Verstärkungsrippe kann die Form der durch die Stufen gebildeten Klemmflächen nochmals wiederholt sein, so dass sich zwei weitere Klemmbereiche für rechteckige Profile ergeben. Alternativ kann die Wandung weitgehend oder vollständig geschlossen sein. In der Wandung können ein, zwei oder mehr Vertiefungen vorgesehen sein, die zum Eingriff mit einer Druckplatte bestimmt sind.

In einer Ausführungsform sind die Muttern als Flügelmuttern ausgebildet. Dies erleichtert die Montage ohne Werkzeug.

In einer Ausführungsform ist die Schraube zum Einschrauben in die zentrale Bohrung als eine Sterngriffschraube ausgebildet. Dies erleichtert ebenfalls die Montage ohne Werkzeug.

In einer Ausführungsform ist ferner eine Kappe zum Aufsetzen auf ein im Bügel liegendes Ende der Schraube vorgesehen. Auf diese Weise wird der Druck von der Schraube besser auf die Druckplatte verteilt.

In einer Ausführungsform ist die Halbschale als ein Ring geformt, der teilweise hohl und nach der Klemmseite offen ausgebildet ist, derart, dass der Ring zumindest abseits der Bohrungen eine radial innenliegende Wand und eine radial außenliegende Wand aufweist, die um die Bohrungen herum und auf der geraden Seite miteinander verbunden sind. Auf diese Weise kann Material eingespart und das Gewicht reduziert werden. Alternativ kann der Ring auch ohne zusätzliche Hohlräume gebildet sein.

Im Bereich der Bohrungen kann die Breite des Rings gegenüber den Bereichen zwischen den Bohrungen erhöht sein, um die Stabilität zu verbessern.

Auf der geraden Seite kann ferner eine Senkung, insbesondere eine zylindrische Senkung, vorgesehen sein, in der beispielsweise eine Unterlegscheibe aufgenommen und positioniert werden kann.

Von der Klemmseite aus kann jede der Bohrungen mit einer Senkung, insbesondere einer kegelförmigen Senkung, versehen sein, beispielsweise um eine Senkkopfschraube zur Wandbefestigung aufzunehmen.

Ausführungsbeispiele der Erfindung werden im Folgenden anhand von Zeichnungen näher erläutert.

Darin zeigen:
- Figur 1: eine schematische Ansicht einer ersten Ausführungsform eines Klemmhalters,
- Figur 2: eine schematische Explosionsansicht der ersten Ausführungsform des Klemmhalters,
- Figur 3: eine schematische Ansicht einer zweiten Ausführungsform eines Klemmhalters, und
- Figur 4: eine schematische Explosionsansicht der zweiten Ausführungsform des Klemmhalters.

Einander entsprechende Teile sind in allen Figuren mit den gleichen Bezugszeichen versehen.

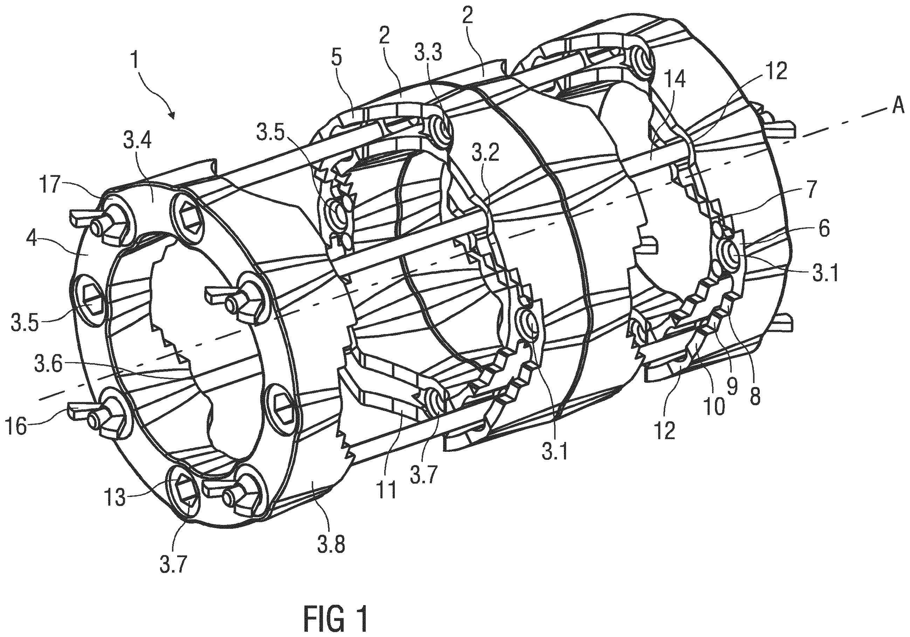

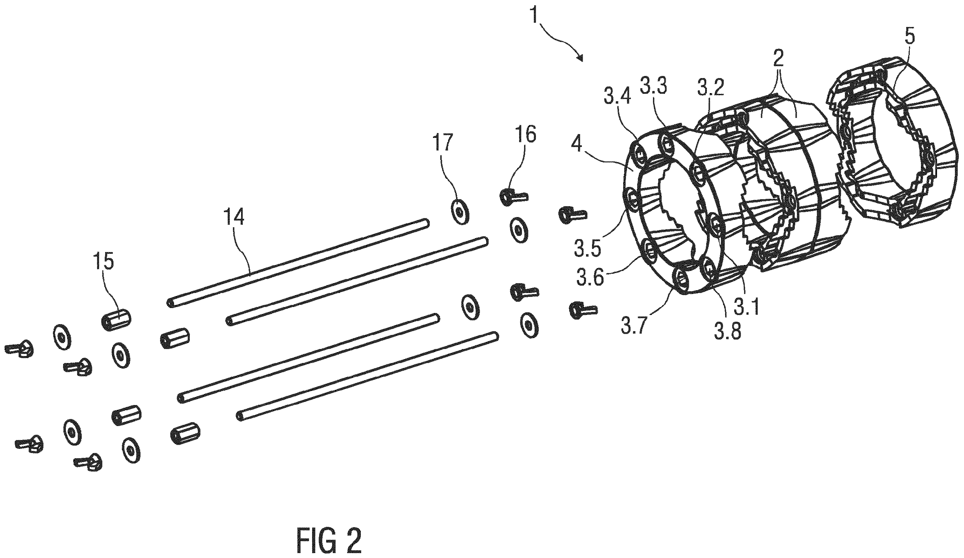

**Figur 1** ist eine schematische Ansicht einer ersten Ausführungsform eines Klemmhalters 1. **Figur 2** ist eine schematische Explosionsansicht der ersten Ausführungsform des Klemmhalters 1.

Der Klemmhalter 1 umfasst mindestens zwei, insbesondere vier, gleichartig oder identisch ausgebildete Halbschalen 2. Jede der Halbschalen ist als ein Ring mit einem im Wesentlichen kreisförmigen oder oktaedrischen Querschnitt ausgebildet. Der Ring weist in einer Radialrichtung eine weitgehend gleichförmige Breite und eine über den Umfang variierende Länge in einer Axialrichtung A auf. Eine Seite der Halbschale 2 in der Axialrichtung A kann als eine gerade Seite 4 ausgebildet sein, die im Wesentlichen in einer Ebene liegt.

In Axialrichtung A sind gleichförmig über den Umfang des Rings verteilt acht Bohrungen 3.1 bis 3.8 vorgesehen. Im Bereich der Bohrungen 3.1 bis 3.8 kann die Breite des Rings gegenüber den Bereichen zwischen den Bohrungen 3.1 bis 3.8 erhöht sein.

Eine der geraden Seite 4 gegenüberliegende Klemmseite 5 ist zerklüftet, das heißt nicht in einer Ebene liegend, jedoch bezüglich mehrerer gedachter, den Ring mittig durch jeweils zwei einander gegenüberliegende Paare von Bohrungen 3.1, 3.5; 3.2, 3.6; 3.3, 3.7; 3.4, 3.8 schneidender Symmetrieachsen spiegelsymmetrisch ausgebildet.

Um das erste Paar von Bohrungen 3.1, 3.5 weist der Ring jeweils eine gerade erste Klemmfläche 6 auf, die beispielsweise etwa 20 mm bis 21 mm breit sein kann. Von der geraden ersten Klemmfläche 6 ausgehend steigt die Länge des Rings in der Axialrichtung A in mehreren Stufen 7 an, so dass sich eine zweite Klemmfläche 8, eine dritte Klemmfläche 9, eine vierte Klemmfläche 10 und gegebenenfalls weitere Klemmflächen ergeben, die insbesondere zur Aufnahme rechteckiger Profile geeignet sind, deren Breite jeweils geringfügig schmaler als die jeweilige Klemmfläche 6, 8, 9, 10 sein können, um das Profil möglichst fest und sicher auf der jeweiligen Klemmfläche zu halten. Beispielsweise weist die zweite Klemmfläche 8 eine Breite von etwa 30 mm bis 31 mm, die dritte Klemmfläche 9 eine Breite von etwa 40 mm bis 41 mm auf und die vierte Klemmfläche 10 eine Breite von etwa 55 mm zwischen zwei Bohrungen 3.1 bis 3.8 auf. Die Stufen 7 können beispielsweise eine Höhe von etwa 3 mm aufweisen.

In alternativen Ausführungsformen kann eine abweichende Anzahl von Stufen und Klemmflächen vorgesehen sein. Ebenso können die Klemmflächen abweichende Breiten und die Stufen eine andere Höhe aufweisen.

Um das zweite Paar von Bohrungen 3.3, 3.7, das um 90° zum ersten Paar von Bohrungen 3.1, 3.5 versetzt ist, ist im Ring jeweils eine erste runde Klemmfläche 11 vorgesehen, die eine Form mit einem Radius oder mehreren miteinander verschnittenen Radien oder in der Art einer Parabel oder Hyperbel um deren Scheitelpunkt aufweist, beispielsweise einen Radius oder mehrere Radien von etwa 22 mm bis 42,4 mm zur Aufnahme kreisförmiger Profile, wie sie für Masten von Sonnenschirmen und/oder runden Balkongeländern gebräuchlich sind (42,4 mm ist beispielsweise ein gebräuchliches Maß für runde Balkongeländer; 22 mm, 25 mm, 32 mm und 38 mm sind typische Schirmstockdurchmesser). Die Konturen dieser Radien sind im Material der Halbschalen nachempfunden, wodurch eine Flächenklemmung entsteht. Es können aber auch größere und kleinere Durchmesser mit Linienklemmung aufgenommen werden. Kreisförmige Profile mit größerem Durchmesser, beispielsweise bis 55 mm, können auch von mindestens zwei der Stufen 7 gehalten werden, besser jedoch auf den runden Klemmbereichen. Zwischen den beiden an die erste runde Klemmfläche 11 angrenzenden Bohrungen kann ebenfalls ein rechteckiges Profil mit einer Breite von bis zu etwa 55 mm gehalten werden, da dies etwa dem Innenabstand der Bohrungen zueinander entspricht. Ein rechteckiges Profil mit einer Breite von bis zu etwa 55 mm kann auch auf der vierten Klemmfläche 10 gehalten werden.

Um das dritte Paar von Bohrungen 3.2, 3.6 und das vierte Paar von Bohrungen 3.4, 3.8, die zum ersten Paar von Bohrungen 3.1, 3.5 und zum zweiten Paar von Bohrungen 3.3, 3.7 jeweils 45° versetzt sind, ist im Ring jeweils eine zweite runde Klemmfläche 12 vorgesehen, die eine Form mit einem Radius oder in der Art einer Parabel oder Hyperbel um deren Scheitelpunkt aufweist, beispielsweise einen Radius von etwa 10 mm bis 25 mm zur Aufnahme kreisförmiger Profile.

Von der Klemmseite 5 aus kann jede der Bohrungen 3.1 bis 3.8 mit einer Senkung, insbesondere einer kegelförmigen Senkung, versehen sein.

Von der geraden Seite 4 aus weist jede der Bohrungen 3.1 bis 3.8 eine Sechskantaufnahme 13 zur Aufnahme eines Schraubenkopfes oder einer Gewindemuffe auf, die beispielsweise als eine 15 mm lange standardisierte Gewindemuffe ausgebildet sein kann. Die Bohrungen 3.1 bis 3.8 können beispielsweise zur Aufnahme von Schrauben oder Gewindestangen 14 der Größe M5 ausgebildet sein. Die Sechskantaufnahme 13 kann zur Aufnahme eines Schraubenkopfes oder einer Gewindemuffe der Nennweite 8 mm ausgebildet sein.

Auf der geraden Seite 4 kann ferner eine Senkung, insbesondere eine zylindrische Senkung, vorgesehen sein, beispielsweise mit einer Nennweite von 10 mm bis 11 mm.

Der Ring kann teilweise hohl ausgebildet und nach einer Seite, insbesondere der Klemmseite, offen ausgebildet sein, derart, dass der Ring zumindest abseits der Bohrungen 3.1 bis 3.8 eine radial innenliegende Wand und eine radial außenliegende Wand aufweist, die um die Bohrungen 3.1 bis 3.8 herum und auf der geraden Seite 4 miteinander verbunden sind. Alternativ kann der Ring auch ohne derartige zusätzliche Hohlräume ausgebildet sein.

In der gezeigten Ausführungsform ist der Bereich innerhalb des Rings offen, kann aber alternativ insbesondere auf der geraden Seite 4 auch geschlossen sein.

Die Halbschale 2 kann aus Kunststoff, alternativ jedoch auch aus einem Metall gebildet sein.

Ferner weist die erste Ausführungsform des Klemmhalters 1 vier Gewindestangen 14 auf. Weiter sind vier Gewindemuffen 15 mit Außensechskant zum Aufschrauben auf die Gewindestangen 14 vorgesehen. Die Gewindemuffen 15 können in einem mittleren Bereich auf die Gewindestangen 14 aufgeschraubt und optional mit diesen verprägt sein. Alternativ können die Gewindestangen mit einer Muffe auch als ein Drehteil ausgebildet sein. Weiter sind acht Muttern 16 zum Aufschrauben auf die Gewindestangen 14 vorgesehen, die insbesondere als Flügelmuttern ausgebildet sein können. Weiter kann eine der Anzahl der Muttern 16 entsprechende Anzahl von Unterlegscheiben 17 vorgesehen sein, zu deren Aufnahme die zylindrischen Senkungen auf der geraden Seite 4 der Halbschale 2 ausgebildet sein können.

Anstatt der Gewindestangen 14 können auch Schrauben vorgesehen sein. In diesem Falle werden nur vier Muttern 16 und Unterlegscheiben 17 benötigt.

Alternativ können auch Gewindestangen 14 ohne Gewindemuffen 15 und stattdessen mit an einem Ende angeordnetem Federring vorgesehen sein.

Zur Montage eines Masts eines Sonnenschirms oder eines Masts für einen anderen Zweck mit dem Klemmhalter 1 kann wie folgt vorgegangen werden. Zwei der Halbschalen 2 werden mit ihren einander zugewandten Klemmseiten um ein feststehendes Profil, beispielsweise ein Balkongeländer angeordnet, so dass das Profil von den dafür jeweils am besten geeigneten Klemmflächen 6, 8, 9, 10, 11, 12 gehalten wird. Die vier Gewindestangen 14 werden in die fluchtenden Bohrungen 3.1 bis 3.8 gesteckt, die dem zu klemmenden Profil am nächsten liegen, so dass die Gewindemuffen 15 jeweils in einer Sechskantaufnahme 13 auf der Seite der beiden Halbschalen 2 liegen, auf der anschließend der Mast befestigt werden soll. Auf der gegenüberliegenden Seite der beiden Halbschalen 2 werden die Unterlegscheiben 17 und die Muttern 16 angebracht und befestigt. Anschließend wird auf der Seite der beiden Halbschalen 2, auf der der Mast befestig werden soll, eine weitere Halbschale 2 mit ihrer geraden Seite 4 in Richtung der am Profil befestigten beiden

Halbschalen 2 auf die Gewindestangen 14 aufgesteckt, vorzugsweise so, dass der Mast senkrecht in die dafür jeweils am besten geeigneten Klemmflächen 6, 8, 9, 10, 11, 12 eingelegt werden kann. Schließlich wird die vierte Halbschale 2 aufgesteckt, so dass die Klemmseiten 5 der beiden zur Aufnahme des Mastes vorgesehenen Halbschalen 2 einander zugewandt sind. Anschließend werden die Unterlegscheiben 17 und die Muttern 16 angebracht und befestigt. Der Mast kann vor der Montage der letzten Halbschale 2 eingelegt oder anschließend vor dem Anziehen der Muttern 16 eingesteckt werden.

Das feststehende Profil und der daran zu befestigende Mast können in einem Winkel von 0, 45° oder 90° zueinander angeordnet sein.

Alternativ kann der Klemmhalter 1 zur Befestigung eines Masts an einer Wand anstatt an einem feststehenden Profil verwendet werden. In diesem Fall werden nur zwei Halbschalen 2 benötigt. Dabei wird eine der Halbschalen 2 mit ihrer geraden Seite an der Wand befestigt, beispielsweise angeschraubt, insbesondere so, dass der Mast senkrecht in die dafür jeweils am besten geeigneten Klemmflächen 6, 8, 9, 10, 11, 12 eingelegt werden kann. Die Halbschale 2 kann mit einer oder mehreren Schrauben, die durch ein oder mehrere der Bohrungen 3.1 bis 3.8 geführt werden, mit der Wand verschraubt werden, beispielsweise unter Verwendung von Dübeln. Zuvor werden von der geraden Seite 4 dieser Halbschale 2 ausgehend Schrauben mit Maschinengewinde, die beispielsweise einen Sechskantkopf oder einen Federring am Ende aufweisen, durch die Bohrungen 3.1 bis 3.8 gesteckt, die den zur Befestigung des Masts vorgesehenen Klemmflächen benachbart sind. Anschließend wird eine weitere Halbschale 2 aufgesteckt, so dass die Klemmseiten 5 der beiden zur Aufnahme des Mastes vorgesehenen Halbschalen 2 einander zugewandt sind. Anschließend werden die Unterlegscheiben 17 und die Muttern 16 angebracht und befestigt. Der Mast kann vor der Montage der letzten Halbschale 2 eingelegt oder anschließend vor dem Anziehen der Muttern 16 eingesteckt werden.

Die Kunststoffe können glasfaserverstärkt und UV-stabilisiert sein.

Die Halbschalen 2 können mittels 3D-Druck hergestellt werden.

Die Maße und Gewichte des Klemmhalters 1 können so optimiert sein, dass für die Logistik insbesondere im Onlineversandhandel möglichst geringe Kosten entstehen. Für die Muffen, Gewindestangen, Flügelmuttern, Unterlegscheiben können standardisierte Teile verwendet werden.

Der beschriebene Klemmhalter 1 ermöglicht eine optimierte Klemmung durch Flächenklemmung an vier Stellen. Dabei können viele verschiedene handelsübliche Größen von Masten von Sonnenschirmen mit dem Klemmhalter 1 an verschiedenen handelsüblichen Profilen, beispielsweise Balkongeländern, befestigt werden. Die mittig stehenden Paare aus Gewindestangen 14 und Gewindemuffen 15 ermöglichen eine optimale Kraftübertragung und unabhängige Klemmung von Geländer und Sonnenschirm für eine einfache Handhabung. Durch den Sechskant der Gewindemuffen 15, der in den Sechskantaufnahmen 13 der beiden inneren Halbschalen 2 gehalten wird, ergibt sich ein Formschluss, durch den die Torsionssteifigkeit verbesserte wird. Der Abstand zweier benachbarter Gewindestangen 14 beiderseits eines Klemmbereichs beträgt beispielsweise etwa 83 mm bis 87 mm, insbesondere 85 mm, so dass sich eine besonders gute Biegesteifigkeit ergibt. Durch die Verwendung von vier Gewindestangen 14 erfolgt die Krafteinleitung nahe am Klemmbereich.

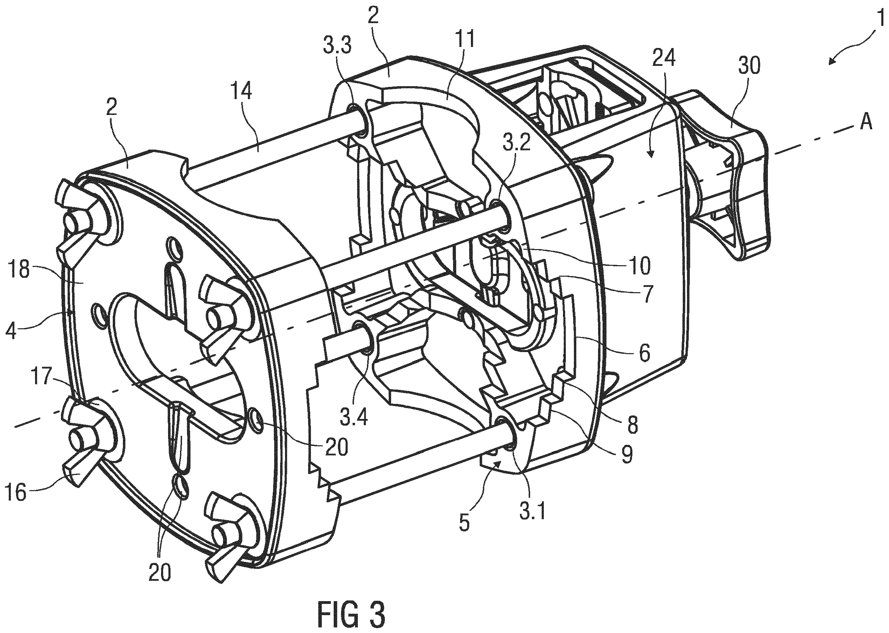

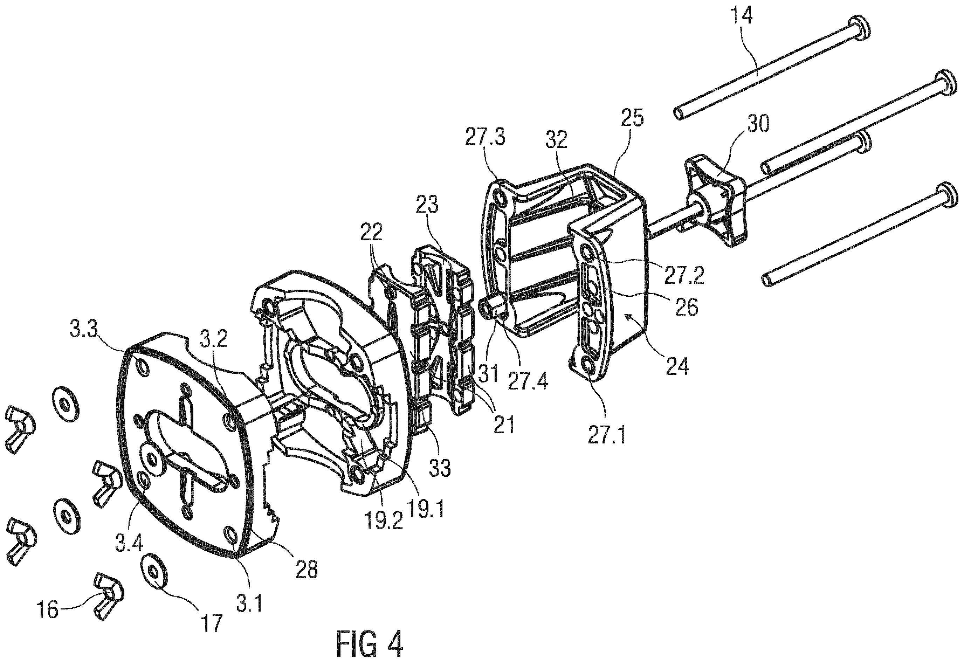

**Figur 3** ist eine schematische Ansicht einer zweiten Ausführungsform eines Klemmhalters 1. **Figur 4** ist eine schematische Explosionsansicht der zweiten Ausführungsform des Klemmhalters 1.

Der Klemmhalter 1 umfasst zwei gleichartig oder identisch ausgebildete Halbschalen 2. Jede der Halbschalen 2 weist einen zumindest annähernd quadratischen Querschnitt auf, kann aber auch wie in der ersten Ausführungsform als ein Ring mit einem im Wesentlichen kreisförmigen oder oktaedrischen Querschnitt ausgebildet sein.

Die nachfolgende Beschreibung bezieht sich auf die Halbschalen 2 mit quadratischem Querschnitt. Eine Seite der Halbschale 2 in einer Axialrichtung A kann als eine gerade Seite 4 ausgebildet sein, die im Wesentlichen in einer Ebene liegt. An den vier Ecken der Halbschale 2 sind in Axialrichtung A vier Bohrungen 3.1 bis 3.4 vorgesehen. Im Bereich der Bohrungen 3.1 bis 3.8 kann die Halbschale 2 verstärkt sein.

Eine der geraden Seite 4 gegenüberliegende Klemmseite 5 ist zerklüftet, das heißt nicht in einer Ebene liegend.

Auf zwei einander in einer Radialrichtung gegenüberliegenden Seiten der Halbschale 2 weist die Halbschale 2 jeweils eine gerade erste Klemmfläche 6 auf, die beispielsweise etwa 20 mm bis 21 mm breit sein kann. Von der geraden ersten Klemmfläche 6 ausgehend steigt eine Länge der Halbschale 2 in der Axialrichtung A in mehreren Stufen 7 an, so dass sich eine zweite Klemmfläche 8, eine dritte Klemmfläche 9, und gegebenenfalls eine vierte Klemmfläche 10 und optional weitere Klemmflächen ergeben, die insbesondere zur Aufnahme rechteckiger Profile geeignet sind, deren Breite jeweils geringfügig schmaler als die jeweilige Klemmfläche 8, 9 sein können, um das Profil möglichst fest und sicher auf der jeweiligen Klemmfläche zu halten. Beispielsweise weist die zweite Klemmfläche 8 eine Breite von etwa 30 mm bis 31 mm, die dritte Klemmfläche 9 eine Breite von etwa 40 mm bis 41 mm auf und die vierte Klemmfläche 10 eine Breite von etwa 50 mm oder 55 mm zwischen zwei Bohrungen 3.1 bis 3.4 auf. Die Stufen 7 können beispielsweise eine Höhe von etwa 3 mm aufweisen.

Auf den zwei einander in einer Radialrichtung gegenüberliegenden Seiten der Halbschale 2, die um 90° zu den beiden zuvor beschriebenen Seiten versetzt sind, weist die Halbschale 2 jeweils eine erste runde Klemmfläche 11 auf, die eine Form mit einem Radius oder mehreren miteinander verschnittenen Radien oder in der Art einer Parabel oder Hyperbel um deren Scheitelpunkt aufweist, beispielsweise einen Radius oder mehrere Radien von etwa 36 mm bis 45 mm, insbesondere 42,4 mm zur Aufnahme kreisförmiger Profile. Kreisförmige Profile mit größerem Durchmesser, beispielsweise bis 50 mm, können von mindestens zwei der Stufen 7 gehalten werden. Zwischen den beiden an die erste runde Klemmfläche 11 angrenzenden Bohrungen kann ebenfalls ein rechteckiges Profil mit einer Breite von bis zu etwa 50 mm gehalten werden. Größere Rechteckprofile können auch zwischen den Schrauben an der Rechteckkontur geklemmt werden; bzw. größere Rundprofile zwischen den Schrauben im Bereich der runden Klemmung.

Von der geraden Seite 4 aus kann jede der Bohrungen 3.1 bis 3.8 eine Sechskantaufnahme 13 zur Aufnahme eines Schraubenkopfes aufweisen. Die Bohrungen 3.1 bis 3.8 können beispielsweise zur Aufnahme von Schrauben oder Gewindestangen der Größe M5 ausgebildet sein. Die Sechskantaufnahme 13 kann zur Aufnahme eines Schraubenkopfes oder einer Gewindemuffe der Nennweite 8 mm ausgebildet sein.

Auf der geraden Seite 4 kann ferner eine Senkung, insbesondere eine zylindrische Senkung, vorgesehen sein, beispielsweise mit einer Nennweite von 10 mm bis 11 mm.

In der gezeigten Ausführungsform weist die Halbschale 2 in Richtung der geraden Seite 4 eine durchbrochene Wandung 18 auf, die durch Verstärkungsrippen 19.1, 19.2 im Inneren der Halbschale 2 verstärkt ist. Die Verstärkungsrippen 19.1, 19.2 können beispielsweise eine ovale oder im Wesentlichen ovale Verstärkungsrippe 19.1 umfassen, die mittig auf der Wandung 18 angeordnet ist und deren Längsseiten den runden Klemmflächen 11 zugewandt sind. Auf den Längsseiten der ovalen Verstärkungsrippe 19.1 kann die Form der runden Klemmfläche 11 nochmals wiederholt sein, so dass sich weitere zwei runde Klemmbereiche ergeben. Die Wandung 18 kann insbesondere innerhalb der ovalen Verstärkungsrippe 19.1 durchbrochen sein. Die Verstärkungsrippen 19.1, 19.2 können weiter beispielsweise von den Bohrungen 3.1 bis 3.4 ausgehende und zur ovalen Verstärkungsrippe 19.1 verlaufende Verstärkungsrippen 19.2 umfassen. Auf den Verstärkungsrippen 19.2 und der ovalen Verstärkungsrippe 19.1 kann die Form der ersten, zweiten und dritten Klemmfläche 6, 8, 9 nochmals wiederholt sein, so dass sich zwei weitere Klemmbereiche für rechteckige Profile ergeben. Alternativ kann die Wandung 18 weitgehend oder vollständig geschlossen sein. In der Wandung 18 können ein, zwei oder mehr Vertiefungen 20 vorgesehen sein, die zum Eingriff mit einer Druckplatte 21 bestimmt sind.

Die Druckplatte 21 weist auf einer zur Anlage an der Wandung 18 bestimmten Seite zu den Vertiefungen 20 komplementäre Vorsprünge 22 auf, um einen Verbleib der Druckplatte 21 in einer gewünschten Ausrichtung zur Halbschale 2 zu unterstützen. Alternativ können die Vertiefungen 20 in der Druckplatte 21 und die Vorsprünge 22 in der Wandung 18 der Halbschale 2 vorgesehen sein.

In der den Vorsprüngen 22 gegenüberliegenden Seite der Druckplatte 21 ist eine Hohlkehle 23 vorgesehen, die eine Form mit einem Radius oder mehreren Radien oder in der Art einer Parabel oder Hyperbel um deren Scheitelpunkt aufweist, beispielsweise einen Radius von etwa 15 mm bis 25 mm, insbesondere miteinander verschnittene Radien von 22 mm und 25 mm für eine Flächenklemmung von Schirmstöcken. Kleinere Durchmesser bis etwa 10 mm lassen sich auch klemmen.

Ferner ist eine weitere Druckplatte 21 vorgesehen, die identisch oder gleichartig wie die zuvor beschriebene Druckplatte 21 ausgebildet ist. Ferner ist ein Bügel 24 vorgesehen, der ein annähernd omegaförmiges Profil aufweisen kann, umfassend einen gewölbten Bereich 25, in dem die Druckplatten 21 aufgenommen und geführt werden können, und zwei daran anschließende, in einer gemeinsamen Ebene liegende, Flansche 26 zur Anlage an die Wandung 18 einer Halbschale 2. Die Flansche 26 weisen Bohrungen 27.1 bis 27.4 auf, die mit den Bohrungen 3.1 bis 3.4 fluchten, wenn die Flansche 26 des Bügels 24 an der Wandung 18 anliegen. Um die Wandung 18 kann ein leicht erhöhter umlaufender Rand 28 vorgesehen sein, um die Positionierung der Flansche 26 innerhalb dieses Randes 28 zu erleichtern. Der gewölbte Bereich 25 weist eine zentrale Bohrung (in der Abbildung verdeckt) in der Axialrichtung auf, die auf ihrer Innenseite eine Sechskantaufnahme für eine Mutter oder Muffe aufweisen kann. Ferner ist eine Schraube 30, insbesondere eine Sterngriffschraube, zum Einschrauben in die zentrale Bohrung vorgesehen. Weiter kann eine Kappe 31 zum Aufsetzen auf die Schraube 30 auf der Innenseite des Bügels 24 vorgesehen sein. Im gewölbten Bereich 25 sind mehrere in der Axialrichtung A verlaufende Rippen 32 vorgesehen, die in dazu komplementäre Nuten 33 in den Druckplatten 21 eingreifen, um diese in der Axialrichtung zu führen und deren Verkippen zu verhindern oder zu erschweren. Alternativ können in den Druckplatten 21 Rippen und in gewölbten Bereich 25 Nuten 33 vorgesehen sein.

Ferner weist die zweite Ausführungsform des Klemmhalters 1 vier Gewindestangen 14 oder Schrauben 14 auf. Weiter sind vier Muttern 16 zum Aufschrauben auf die Gewindestangen 14 vorgesehen, die insbesondere als Flügelmuttern ausgebildet sein können. Weiter kann eine der Anzahl der Muttern 16 entsprechende Anzahl von Unterlegscheiben 17 vorgesehen sein.

Zur Montage eines Masts eines Sonnenschirms oder für einen anderen Zweck mit dem Klemmhalter 1 an einem feststehenden Profil kann wie folgt vorgegangen werden. Die Schraube 30 wird in die zentrale Bohrung eingeschraubt, nachdem gegebenenfalls eine Mutter oder Muffe in deren Sechskantaufnahme eingesetzt wurde. Gegebenenfalls wird die Kappe 31 im Bügel 24 auf die Schraube 30 aufgesteckt. Die zwei Druckplatten 21 werden mit einander zugewandten Hohlkehlen 23 in den Bügel 24 eingelegt, so dass die Rippen 32 in den Nuten 33 eingreifen. Der Bügel 24 wird auf die Wandung 18 einer der Halbschalen 2 aufgesetzt, wobei der Bügel so steht, dass der Mast senkrecht darin eingesetzt werden kann, während die Halbschale 2 so ausgerichtet ist, dass die zur Aufnahme des feststehenden Profils am besten geeigneten Klemmflächen 6, 8, 9, 10, 11 in der entsprechenden Position stehen, je nachdem ob das feststehende Profil senkrecht oder waagerecht ausgerichtet ist. Alternativ kann eine der beiden Druckplatten 21 zuvor auf die Wandung 18 aufgesteckt werden.

Die Halbschale 2 wird mit ihrer Klemmseite 5 an dem feststehenden Profil, beispielsweise einem Balkongeländer, angeordnet, so dass das Profil von den dafür jeweils am besten geeigneten Klemmflächen 6, 8, 9, 10, 11, gehalten wird. Die vier Gewindestangen 14 werden vom Bügel 24 aus in die fluchtenden Bohrungen 27.1 bis 27.4 und 3.1 bis 3.4 gesteckt. Schließlich wird die andere Halbschale 2 aufgesteckt, so dass die Klemmseiten 5 der beiden zur Aufnahme des feststehenden Profils vorgesehenen Halbschalen 2 einander zugewandt sind und das Profil dazwischen gehalten wird. Anschließend werden die Unterlegscheiben 17 und die Muttern 16 angebracht und befestigt. Der Mast kann vor der Montage des Bügels 24 auf der Halbschale 2 eingelegt oder anschließend vor dem Anziehen der Schraube 30 zwischen den beiden Druckplatte 21 eingesteckt werden.

Das feststehende Profil und der daran zu befestigende Mast können in einem Winkel von 0 oder 90° zueinander angeordnet sein.

Die Halbschalen 2, die Druckplatten 21 und der Bügel 24 sowie die Kappe 31 können aus Kunststoff, alternativ jedoch auch aus einem Metall gebildet sein.

Die Halbschalen 2 können aus einem Kunststoff und der Bügel 24 aus einem anderen Kunststoff gebildet sein. Die Kunststoffe können glasfaserverstärkt und UV-stabilisiert sein.

Die Halbschalen 2, die Druckplatten 21 und der Bügel 24 können mittels 3D-Druck hergestellt werden.

Die Maße und Gewichte des Klemmhalters 1 können so optimiert sein, dass für die Logistik insbesondere im Onlineversandhandel möglichst geringe Kosten entstehen. Für die Muffen, Gewindestangen, Flügelmuttern, Unterlegscheiben können standardisierte Teile verwendet werden.

Der beschriebene Klemmhalter 1 ermöglicht eine optimierte Klemmung durch Flächenklemmung an vier Stellen. Dabei können viele verschiedene handelsübliche Größen von Masten von Sonnenschirmen mit dem Klemmhalter 1 an verschiedenen handelsüblichen Profilen, beispielsweise Balkongeländern, befestigt werden. Die Klemmung des Masts des Sonnenschirms erfolgt durch eine Axialkraft, die von der Sterngriffschraube 30 aufgebracht wird. Diese Axialkraft wird mit Hilfe der Druckplatte 21 auf den Klemmbereich verteilt und so eine Flächenklemmung erreicht. Der dreiteilige Aufbau des Klemmhalters 1 ermöglicht eine optimale Kraftübertragung und eine unabhängige Klemmung von Geländer und Schirm für eine einfache Handhabung. Durch die Rippen 32 und Nuten 33 wird die Druckplatte 21 allseitig geführt und so die Gefahr der Verkippung vermindert. Auf diese Weise wird eine verbesserte Führung und eine optimale Kraftübertragung ermöglicht. Die Verwendung von Flügelmuttern und Sterngriffschrauben ermöglicht eine einfache Montage ohne Werkzeug.

Durch den Formschluss des Bügels 24 mit den Halbschalen 2 ergibt sich eine verbesserte Biege- und Torsionssteifigkeit. Durch die vier Schrauben 14 und die zwei im Bügel 24 geführten Klemmplatten 21 ergibt sich eine Krafteinleitung nahe am Klemmbereich.

Anstatt von Sechskantaufnahmen 13 und Gewindemuffen 15 mit Außensechskant können auch andere formschlüssige Paarungen verwendet werden, beispielsweise Vierkant oder Zwölfkant.

### BEZUGSZEICHENLISTE

- 1: Klemmhalter
- 2: Halbschale
- 3.1 bis 3.8: Bohrung
- 4: gerade Seite
- 5: Klemmseite
- 6: erste Klemmfläche
- 7: Stufe
- 8: zweite Klemmfläche
- 9: dritte Klemmfläche
- 10: vierte Klemmfläche
- 11: erste runde Klemmfläche
- 12: zweite runde Klemmfläche
- 13: Sechskantaufnahme
- 14: Gewindestange, Schraube
- 15: Gewindemuffe
- 16: Mutter
- 17: Unterlegscheibe
- 18: Wandung
- 19.1: ovale Verstärkungsrippe
- 19.2: Verstärkungsrippe
- 20: Vertiefung
- 21: Druckplatte
- 22: Vorsprung
- 23: Hohlkehle
- 24: Bügel
- 25: gewölbter Bereich
- 26: Flansch
- 27.1 bis 27.4: Bohrung
- 28: umlaufender Rand
- 30: Schraube
- 31: Kappe
- 32: Rippe
- 33: Nut
- A: Axialrichtung

## Patentansprüche

1. Klemmhalter (1) zum Befestigen eines Masts, wobei der Klemmhalter (1) mindestens zwei gleichartig ausgebildete Halbschalen (2) umfasst, die in einer Axialrichtung (A) jeweils eine gerade Seite (4) und eine Klemmseite (5) aufweisen, wobei in einer Axialrichtung (A) verlaufend gleichförmig über einen Umfang der Halbschale (2) verteilt mindestens vier oder acht Bohrungen (3.1 bis 3.8) vorgesehen sind, wobei auf zwei einander in einer Radialrichtung gegenüberliegenden Seiten der Halbschale (2) jeweils eine gerade erste Klemmfläche (6) mit einer ersten Breite angeordnet ist, wobei von der geraden ersten Klemmfläche (6) ausgehend eine Länge der Halbschale (2) in der Axialrichtung (A) in mehreren Stufen (7) ansteigt, so dass sich
weitere gerade Klemmflächen (8, 9, 10) mit zunehmender Breite ergeben, **dadurch gekennzeichnet, dass**
auf zwei einander in einer Radialrichtung gegenüberliegenden Seiten der Halbschale (2), die um einen Winkel um die Axialrichtung zu den beiden Seiten mit den geraden
Klemmflächen (6, 8, 9, 10)
versetzt sind, jeweils eine erste runde Klemmfläche (11) vorgesehen ist, die eine Form mit einem Radius oder mehreren Radien oder in der Art einer Parabel oder Hyperbel um deren Scheitelpunkt aufweist.

2. Klemmhalter (1) nach Anspruch 1, umfassend vier gleichartig ausgebildete Halbschalen (2).

3. Klemmhalter (1) nach einem der Ansprüche 1 oder 2, wobei jede der Halbschalen (2) einen zumindest annähernd kreisförmigen, quadratischen oder oktaedrischen Querschnitt aufweist.

4. Klemmhalter (1) nach einem der vorhergehenden Ansprüche, wobei auf zwei Paaren von jeweils zwei einander in einer Radialrichtung gegenüberliegenden Seiten der Halbschale (2), die um einen Winkel um die Axialrichtung zu den beiden Seiten mit den geraden Klemmflächen (6, 8, 9, 10) versetzt sind, jeweils eine zweite runde Klemmfläche (12) vorgesehen ist, die eine Form mit einem Radius oder mehreren Radien oder in der Art einer Parabel oder Hyperbel um deren Scheitelpunkt aufweist, wobei der Radius der zweiten runden Klemmfläche (12) geringer ist als der Radius der ersten runden Klemmfläche (11).

5. Klemmhalter (1) nach einem der vorhergehenden Ansprüche, wobei die Bohrungen (3.1 bis 3.8) von der geraden Seite (4) aus jeweils eine Sechskantaufnahme (13) zur Aufnahme eines Schraubenkopfes oder einer Gewindemuffe aufweisen.

6. Klemmhalter (1) nach einem der vorhergehenden Ansprüche, ferner umfassend vier Gewindestangen (14), acht Muttern (16) und vier Gewindemuffen (15) mit Außensechskant zum Aufschrauben auf die Gewindestangen (14), die in einem mittleren Bereich auf die Gewindestangen (14) aufschraubbar oder aufgeschraubt und optional mit diesen verprägt sind.

7. Klemmhalter (1) nach einem der Ansprüche 1 bis 5, ferner umfassend vier Schrauben (14) und vier Muttern (16), einen Bügel (24), umfassend einen gewölbten Bereich (25) zur Aufnahme eines Masts und zwei an den gewölbten Bereich (25) anschließende Flansche (26) zur Anlage an der geraden Seite (4) einer Halbschale (2), wobei die Flansche (26) Bohrungen (27.1 bis 27.4) aufweisen, die mit den Bohrungen (3.1 bis 3.4) fluchten, wenn die Flansche (26) des Bügels (24) an der geraden Seite (4) anliegen, wobei der gewölbte Bereich (25) eine zentrale Bohrung in der Axialrichtung (A) aufweist, die auf ihrer Innenseite eine Sechskantaufnahme für eine Mutter oder Muffe aufweist, wobei ferner eine Schraube (30) zum Einschrauben in die zentrale Bohrung vorgesehen ist.

8. Klemmhalter (1) nach Anspruch 7, wobei zwei Druckplatten (21) zur Aufnahme im gewölbten Bereich (25) des Bügels (24) vorgesehen sind, die einander in einem Einbauzustand zugewandte Hohlkehlen (23) zur Aufnahme des Masts aufweisen.

9. Klemmhalter (1) nach Anspruch 8, wobei im gewölbten Bereich (25) und an den Druckplatten (21) zueinander komplementäre Rippen (32) und Nuten (33) zur Führung der Druckplatten (21) in der Axialrichtung (A) vorgesehen sind.

10. Klemmhalter (1) nach Anspruch 8 oder 9, wobei die Halbschale (2) in Richtung der geraden Seite (4) eine Wandung (18) aufweist, wobei die Wandung (18) und eine zur Anlage an der Wandung (18) bestimmte Seite der Druckplatte (21) zueinander komplementäre Vertiefungen (20) und
Vorsprünge (22) aufweisen.

11. Klemmhalter (1) nach Anspruch 10, wobei um die Wandung (18) ein umlaufender Rand (28) zur Positionierung der Flansche (26) vorgesehen ist.

12. Klemmhalter (1) nach einem der Ansprüche 6 bis 11, wobei die Muttern (16) als Flügelmuttern ausgebildet sind.

13. Klemmhalter (1) nach einem der Ansprüche 6 bis 12, wobei die Schraube (30) zum Einschrauben in die zentrale Bohrung als eine Sterngriffschraube ausgebildet ist.

14. Klemmhalter (1) nach einem der Ansprüche 7 bis 13, wobei ferner eine Kappe (31) zum Aufsetzen auf ein im Bügel (24) liegendes Ende der Schraube (30) vorgesehen ist.

15. Klemmhalter (1) nach einem der vorhergehenden Ansprüche, wobei die Halbschale (2) als ein Ring geformt ist, der teilweise hohl und nach der Klemmseite (5) offen ausgebildet ist, derart, dass der Ring zumindest abseits der Bohrungen (3.1 bis 3.8) eine radial innenliegende Wand und eine radial außenliegende Wand aufweist, die um die Bohrungen (3.1 bis 3.8) herum und auf der geraden Seite (4) miteinander verbunden sind.

## Claims

1. Clamping holder (1) for the fastening of a pole, wherein the clamping holder (1) comprises at least two similar half-shells (2) which, in an axial direction (A), each have a rectilinear side (4) and a clamping side (5), wherein at least four or eight bores (3.1 to 3.8), running in an axial direction (A), are provided distributed uniformly over a circumference of the half-shell (2), wherein a respective first rectilinear clamping surface (6) of a first width is arranged on two radially opposite sides of the half-shell (2), wherein, starting from the first rectilinear clamping surface (6), a length of the half-shell (2) increases in a number of steps (7) in the axial direction (A) to give further rectilinear clamping surfaces (8, 9, 10) of increasing width, **characterized in that** two radially opposite sides of the half-shell (2) which are offset by an angle about the axial direction in relation to the two sides with the rectilinear clamping surfaces (6, 8, 9, 10) have provided on them a respective first round clamping surface (11), which comprises a form of a radius or a number of radii or a the form of a parabola or hyperbola around its apex.

2. Clamping holder (1) according to Claim 1, comprising four similar half-shells (2).

3. Clamping holder (1) according to either of Claims 1 and 2, wherein each of the half-shells (2) has an at least more or less circular, square or octahedral cross section.

4. Clamping holder (1) according to one of the preceding claims, wherein two pairs of respectively two radially opposite sides of the half-shell (2) which are offset by an angle about the axial direction in relation to the two sides with the rectilinear clamping surfaces (6, 8, 9, 10) have provided on them a respective second round clamping surface (12), which comprises a form of a radius or a number of radii or in a form of a parabola or hyperbola about its apex, wherein the radius of the second round clamping surface (12) is smaller than the radius of the first round clamping surface (11).

5. Clamping holder (1) according to one of the preceding claims, wherein, starting from the rectilinear side (4), the bores (3.1 to 3.8) each have a hexagonal mount (13) for accommodating a screw head or a threaded sleeve.

6. Clamping holder (1) according to one of the preceding claims, also comprising four threaded rods (14), eight nuts (16) and four externally hexagonal threaded sleeves (15) for screwing onto the threaded rods (14), the threaded sleeves (15) being screwable or screwed onto a central region of the threaded rods (14) and optionally stamp-fitted thereon.

7. Clamping holder (1) according to one of Claims 1 to 5, also comprising four screws (14) and four nuts (16), and a bracket (24) comprising a curved region (25) for accommodating a pole and two flanges (26), which adjoin the curved region (25) and are intended for butting against the rectilinear side (4) of a half-shell (2), wherein the flanges (26) have bores (27.1 to 27.4), which are in alignment with the bores (3.1 to 3.4) when the flanges (26) of the bracket (24) butt against the rectilinear side (4), wherein the curved region (25) has a central bore in the axial direction (A), and this central bore has, on its inner side, a hexagonal mount for a nut or sleeve, wherein a screw (30) for screwing into the central bore is also provided.

8. Clamping holder (1) according to Claim 7, wherein two pressure-exerting plates (21) are provided for accommodation in the curved region (25) of the bracket (24), these pressure-exerting plates having hollow channels (23) which are directed towards one another in an installed state and are intended for accommodating the pole.

9. Clamping holder (1) according to Claim 8, wherein the curved region (25) and the pressure-exerting plates (21) are provided with ribs (32) and grooves (33), which are complementary in relation to one another and are intended for guiding the pressure-exerting plates (21) in the axial direction (A).

10. Clamping holder (1) according to Claim 8 or 9, wherein the half-shell (2) has a wall (18) in the direction of the rectilinear side (4), wherein the wall (18) and a side of the pressure-exerting plate (21) which is intended for butting against the wall (18) have depressions (20) and protrusions (22) which are complementary in relation to one another.

11. Clamping holder (1) according to Claim 10, wherein the wall (18) is provided with a surrounding edge (28) for the positioning of the flanges (26).

12. Clamping holder (1) according to one of Claims 6 to 11, wherein the nuts (16) are designed in the form of wing nuts.

13. Clamping holder (1) according to one of Claims 6 to 12, wherein the screw (30) for screwing into the central bore is designed in the form of a star-grip screw.

14. Clamping holder (1) according to one of Claims 7 to 13, wherein also provided is a cap (31) for positioning on an end of the screw (30) which is located in the bracket (24).

15. Clamping holder (1) according to one of the preceding claims, wherein the half-shell (2) is in the form of a ring which is designed to be partially hollow and open in the direction of the clamping side (5) such that, at least beyond the bores (3.1 to 3.8), the ring has a radially inner wall and a radially outer wall, which are connected to one another around the bores (3.1 to 3.8) and on the rectilinear side (4).

## Revendications

1. Support de serrage (1) servant à la fixation d'un mât, le support de serrage (1) comportant au moins deux demi-coques (2) réalisées de manière similaire, qui présentent dans une direction axiale (A) respectivement un côté droit (4) et un côté de serrage (5), au moins quatre ou huit alésages (3.1 à 3.8) étant prévus de manière à s'étendre dans une direction axiale (A) de manière répartie uniformément sur une périphérie de la demi-coque (2), une première surface de serrage droite (6) présentant une première largeur étant disposée respectivement sur deux côtés de la demi-coque (2) opposés l'un à l'autre dans une direction radiale, une longueur de la demi-coque (2) augmentant en plusieurs étages (7) dans la direction axiale (A) à partir de la première surface de serrage droite (6), de sorte que d'autres surfaces de serrage droites (8, 9, 10) de largeur croissante en résultent, **caractérisé en ce que** sur deux côtés de la demi-coque (2) opposés l'un à l'autre dans une direction radiale, qui sont décalés d'un angle autour de la direction axiale par rapport aux deux côtés dotés des surfaces de serrage droites (6, 8, 9, 10), une première surface de serrage ronde (11) est prévue respectivement, laquelle présente une forme dotée d'un rayon ou de plusieurs rayons ou de type parabole ou hyperbole autour de son sommet.

2. Support de serrage (1) selon la revendication 1, comportant quatre demi-coques (2) réalisées de manière similaire.

3. Support de serrage (1) selon l'une des revendications 1 ou 2, dans lequel chacune des demi-coques (2) présente une section transversale au moins approximativement circulaire, quadratique ou octaédrique.

4. Support de serrage (1) selon l'une des revendications précédentes, dans lequel sur deux paires de côtés de la demi-coque (2) respectivement opposés les uns aux autres dans une direction radiale, qui sont décalés d'un angle autour de la direction axiale par rapport aux deux côtés dotés des surfaces de serrage droites (6, 8, 9, 10), une deuxième surface de serrage ronde (11) est prévue respectivement, laquelle présente une forme dotée d'un rayon ou de plusieurs rayons ou de type parabole ou hyperbole autour de son sommet, dans lequel le rayon de la deuxième surface de serrage ronde (12) est inférieur au rayon de la première surface de serrage ronde (11).

5. Support de serrage (1) selon l'une des revendications précédentes, dans lequel les alésages (3.1 à 3.8) présentent respectivement un logement à six pans (13) pour le logement d'une tête de vis ou d'un manchon fileté à partir du côté droit (4).

6. Support de serrage (1) selon l'une des revendications précédentes, comportant en outre quatre tiges filetées (14), huit écrous (16) et quatre manchons filetés (15) présentant six pans extérieurs pour le vissage sur les tiges filetées (14), lesquels peuvent être vissés ou sont vissés sur les tiges filetées (14) dans une région centrale et sont éventuellement estampés avec celles-ci.

7. Support de serrage (1) selon l'une des revendications 1 à 5, comportant en outre quatre vis (14) et quatre écrous (16), un étrier (24), comportant une région bombée (25) pour le logement d'un mât et deux brides (26) adjacentes à la région bombée (25) pour l'appui contre le côté droit (4) d'une demi-coque (2), les brides (26) présentant des alésages (27.1 à 27.4) qui sont alignés sur les alésages (3.1 à 3.4) lorsque les brides (26) de l'étrier (24) s'appuient contre le côté droit (4), la région bombée (25) présentant un alésage central dans la direction axiale (A), lequel présente, sur son côté intérieur, un logement à six pans pour un écrou ou un manchon, dans lequel en outre une vis (30) est destinée à être vissée dans l'alésage central.

8. Support de serrage (1) selon la revendication 7, dans lequel deux plaques de pression (21) sont destinées à être logées dans la région bombée (25) de l'étrier (24), lesquelles présentent des gorges (23) tournées l'une vers l'autre dans l'état d'installation pour le logement du mât.

9. Support de serrage (1) selon la revendication 8, dans lequel des nervures (32) et des rainures (33) complémentaires les unes aux autres sont prévues dans la région bombée (25) et sur les plaques de pression (21) pour le guidage des plaques de pression (21) dans la direction axiale (A).

10. Support de serrage (1) selon la revendication 8 ou 9, dans lequel la demi-coque (2) présente une paroi (18) dans la direction du côté droit (4), dans lequel la paroi (18) et un côté de la plaque de pression (21) destiné à l'appui contre la paroi (18) présentent des évidements (20) et des saillies (22) complémentaires les uns aux autres.

11. Support de serrage (1) selon la revendication 10, dans lequel un bord périphérique (28) servant au positionnement des brides (26) est prévu autour de la paroi (18).

12. Support de serrage (1) selon l'une des revendications 6 à 11, dans lequel les écrous (16) sont réalisés sous forme d'écrous papillons.

13. Support de serrage (1) selon l'une des revendications 6 à 12, dans lequel la vis (30) est réalisée pour être vissée dans l'alésage central en tant que vis à poignée étoile.

14. Support de serrage (1) selon l'une des revendications 7 à 13, dans lequel en outre un capuchon (31) destiné à être placé sur une extrémité de la vis (30) située dans l'étrier (24) est prévu.

15. Support de serrage (1) selon l'une des revendications précédentes, dans lequel la demi-coque (2) est formée en tant que bague qui est réalisée de manière partiellement creuse et ouverte vers le côté de serrage (5), de telle sorte que la bague présente, au moins à l'écart des alésages (3.1 à 3.8), une paroi radialement intérieure et une paroi radialement extérieure, qui sont reliées l'une à l'autre autour des alésages (3.1 à 3.8) et sur le côté droit (4).
